Europäisches Patentamt

European Patent Office

Office européen des brevets

(11) Publication number: **0 461 925 A2**

# EUROPEAN PATENT APPLICATION

(21) Application number: 91305421.9

(51) Int. Cl.⁵: **G06F 12/08**

(22) Date of filing : 14.06.91

(30) Priority: 15.06.90 US 538571

(43) Date of publication of application:
18.12.91 Bulletin 91/51

(84) Designated Contracting States:
AT BE CH DE DK ES FR GB GR IT LI LU NL SE

(71) Applicant: Compaq Computer Corporation
20555 S.H. 249
Houston Texas 77070 (US)

(72) Inventor: Tullis, Michael E.
11803 Pebbletown Dr.
Houston, Texas 77070 (US)
Inventor: Kelly, Philip C.
14402 Silver Lace
Houston, Texas 77070 (US)
Inventor: Collins, Michael J.
16030 Lakestone Drive
Tomball, Texas 77375 (US)

(74) Representative: Brunner, Michael John et al
GILL JENNINGS & EVERY 53-64 Chancery
Lane
London WC2A 1HN (GB)

(54) Lookaside cache.

(57) A "lookaside" cache architecture whereby the cache system is situated on the processor bus in parallel with the memory controller. This design enables the cache system and the memory controller to begin servicing a processor memory read request simultaneously, thereby removing any delay penalty for cache misses that would otherwise occur in a traditional look-through design. The cache and the memory controller both begin a processor memory read cycle simultaneously. If a cache miss occurs, the memory controller completes the cycle. If a cache hit occurs, the cache system aborts the memory controller and completes the memory read cycles in zero wait states. The lookaside cache design allows the cache system to be easily removable from the computer system to provide an optional capability.

EP 0 461 925 A2

**Fig. 2**

The present invention relates to cache architectures in computer systems, and more specifically to a "lookaside" microprocessor cache architecture whereby a cache system is placed on the processor's local bus in parallel with the microprocessor and the memory controller.

The computer industry is a vibrant and growing field that continues to evolve as new innovations occur. The driving force behind this innovation has been the increasing demand for faster and more powerful computers. A major bottleneck in computer speed has historically been the speed with which data can be accessed from memory, referred to as the memory access time. The microprocessor, with its relatively fast processor cycle times, has generally had to wait during memory accesses to account for the relatively slow memory access times. Therefore, improvement in memory access times has been one of the major areas of research in enhancing computer performance.

In order to bridge the gap between fast processor cycle times and slow memory access times, cache memory was developed. A cache is a small amount of very fast, and expensive, zero wait state memory that is used to store a copy of frequently accessed code and data from system memory. The microprocessor can operate out of this very fast memory and thereby reduce the number of wait states that must be interposed during memory accesses.

The management or control of a cache is generally performed by a device referred to as a cache controller. The cache controller is principally responsible for keeping track of the contents of the cache as well as controlling data movement into and out of the cache. Another responsibility of the cache controller is the preservation of cache coherency, which refers to the requirement that the copy of system memory held in the cache be identical to the data held in system memory. In addition, the cache controller is responsible for determining which memory addresses are capable of residing in the cache, referred to as cacheable addresses. Certain segments of addressable memory may not be allowed to reside in the cache due to cache coherency considerations. The cache controller is therefore responsible for preventing data from non-cacheable addresses from being placed in the cache.

Cache memory and its respective cache controller are collectively referred to as a cache system. In computer systems which include microprocessor cache systems, the cache system has generally been interfaced in a serial fashion between the processor and the system or memory bus. In this configuration, commonly referred to as a "look-through" configuration, the processor cannot talk directly to the memory or system bus, but rather the cache controller acts as the primary cycle control interface between the memory or system bus and the processor. When the processor requires data and initiates a memory read, it provides the respective memory addresses and address and cycle control signals to the cache controller. The cache controller compares these addresses with the addresses of the data resident in the cache.

If a cache read hit occurs, the cache controller provides the requested data to the processor and the control signals and address values are not passed on to the memory or system bus. If the data is determined to be non-cacheable or a cache read miss occurs, then the cache controller couples the addresses received from the processor to the memory or system bus in the computer system, and the cache controller busses the control signals to the system or memory bus to perform an operation on those buses. It is noted that there is always a delay period, generally one clock cycle, between the processor providing the address values and control signals and those values and signals being presented to the memory or system bus. When the data is returned from system memory it is provided to the processor and is also placed into the cache.

Write operations generally perform differently. In a write-through cache design all writes are passed to the memory, but generally the operation is posted so that the processor can proceed with no wait states. if the write operations exceed the posting limit, then operation is similar to a cache read miss. In a write-back cache design, the writes are performed only to the cache, with the cache only providing the information to the system when another party requests the address. The processor is released in zero wait states in all cases. Therefore, read operations are of primary interest in removing delay periods from computer system operation.

The addition of a microprocessor cache system to a computer system generally improves effective memory access times considerably. However, the serial look-through configuration described above whereby the cache system is interfaced serially between the microprocessor and the processor bus is sub-optimal because on cache misses a delay is added to the memory access time that does not occur in computer systems without microprocessor cache systems. In computer systems which do not include microprocessor cache systems, the processor initiates memory read cycles directly to the memory controller without any delay interposed for a cache look-up. This is in contrast to what occurs on a cache miss in a look-through cache configuration, whereby the cache controller must first determine if the requested memory locations are cached before initiating memory read cycles to the memory controller. Therefore, a cache miss in a look-through cache configuration interposes a delay between the time that the processor initiates the data request and the time that main memory read cycles are initiated on cache misses, this delay being the time required for the cache to determine that the requested data does not reside there. As a result, the memory access time on a cache miss in a computer system with a look-through microprocessor cache system is actually longer than the memory access time of a computer system that does not include a microprocessor cache system. The look-through cache configuration reduces the efficiency of the cache system in this situation by adding a delay to the already slow memory access time on cache misses. Therefore it is desirable that a cache system design not impose any extra delays on cache misses that would not otherwise occur if a microprocessor cache system were not included in the computer system.

The addition of a microprocessor cache system increases the overall cost of the computer system while at the same time considerably reducing memory access times in the computer system. Therefore, the addition of a microprocessor cache system to a computer system introduces a trade-off between increased cost and faster memory access times. It is therefore desirable for a microprocessor cache system be made an optional and removable part of a computer system to allow a user to tailor the computer system to fit various needs.

The present invention includes a lookaside microprocessor cache design whereby a cache system is situated on the processor's local bus fully in parallel with the microprocessor and the memory controller. In this manner, the memory controller begins processor memory read cycles concurrently with the cache controller and thus no extra delay is added to cache misses. In addition, the lookaside cache design allows the cache system to be an optional and removable part of a personal computer system.

The cache controller and memory controller each begin a processor memory read cycle simultaneously when the processor initiates a memory read. If the processor cycle is a cache read hit, the cache controller aborts the memory read cycle being performed by the memory controller and completes the processor memory read cycle itself in zero wait states. If the processor cycle is a cache read miss, the memory controller completes the memory read cycles as it normally would if the cache system were not present.

Since the cache controller and the memory controller both begin to service the processor request simultaneously, there is no added penalty for cache misses. Furthermore, the lookaside architecture permits the cache system to be optional since the memory controller always begins processor memory read cycles and is aborted only on cache hits. When the cache system is not installed, the memory controller interprets all processor cycles as cache misses. Therefore, a user can tailor his personal computer either for reduced cost by not including the cache system or for faster memory access times by including the cache system.

A better understanding of the invention can be obtained when the following detailed description of the preferred embodiment is considered in conjunction with the following drawings, in which:

Figure 1 is a block diagram of a computer system including a lookaside cache system according to the present invention;

Figure 2 is a block diagram of the lookaside cache system and its output signal interface according to the present invention;

Figure 3 is a more detailed block diagram of the lookaside cache system and portions of its control signal interface according to the present invention; and

Figures 4A and 4B are a flowchart depicting the operation of the lookaside cache system during processor memory read cycles according to the present invention.

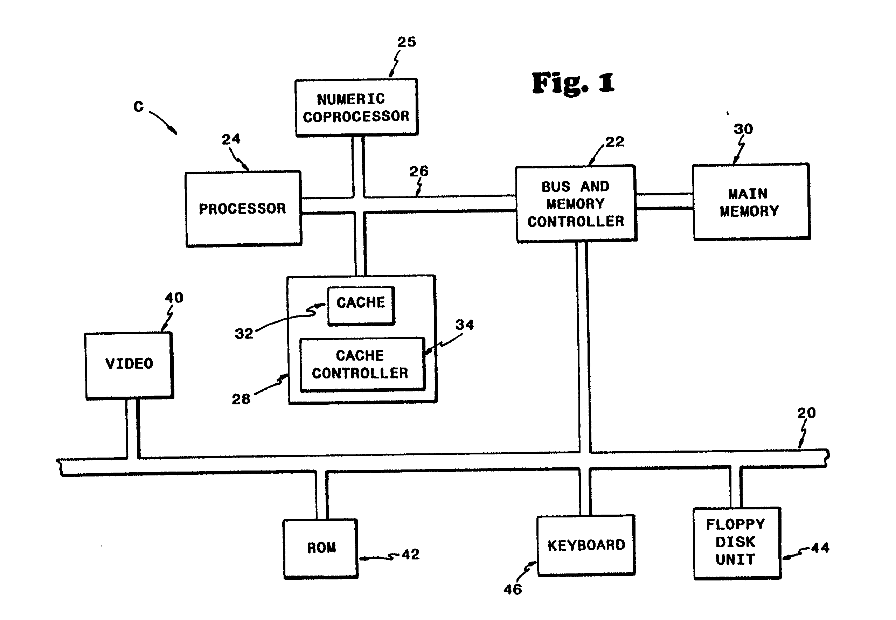

Referring now to Figure 1, a personal computer system C is generally shown. Many of the details of a computer system that are not relevant to the present invention have been omitted for the purpose of clarity. In the description that follows, a signal name followed by an asterisk indicates that the signal is asserted when it has a low logic level and is the inverse of the same signal name without an asterisk. The computer system C includes a system bus 20 that is preferably based on the Industry Standard Architecture (ISA), a bus architecture introduced in the International Business Machines (IBM) AT personal computer. A controller chip 22 comprising a bus controller and a memory controller is connected to the system bus 20. Random access memory 30, hereinafter referred to as main memory 30, is coupled to the controller chip 22. The controller chip 22 is coupled to a microprocessor 24 through a local processor bus 26, which preferably includes a processor address portion, a processor data portion, and a control signal portion. The microprocessor 24 is preferably an Intel Corporation (Intel) 80386SX microprocessor according to the preferred embodiment. Details on the operation of the controller chip 22 beyond those discussed in this specification are considered known to those skilled in the art and are omitted for clarity.

A lookaside cache system 28 according to the present invention, which comprises cache memory 32 and cache controller logic circuitry 34, is coupled to the processor bus 26 between the processor 24 and the controller chip 22. A numeric coprocessor 25 may optionally be connected to the processor bus 26. A video section 40 and read only memory (ROM) 42 are preferably attached to the system bus 20. The video section 40 preferably includes video memory, which preferably includes video RAM and ROM. The main memory 30 and the memory located on the system bus 26 are collectively referred to as system memory. A floppy disk unit 44 and a keyboard 46 may also be preferably attached to the system bus 20.

The cache 32 according to the preferred embodiment is preferably a 4 kbyte, 4-way set associative cache with a line size of 16 bits. The cache system 28 is capable of caching the majority of logical memory addresses comprising system memory. However, some memory addresses are designated as non-cacheable according to the preferred embodiment. The cache controller 34 according to the present invention includes logic circuitry which determines whether a memory address generated by the processor 24 is cacheable, or capable of residing in the cache 32. The cache controller 34 includes enabling ports and logic circuitry which enable a user to enable or disable the cache system 28 in the computer system C.

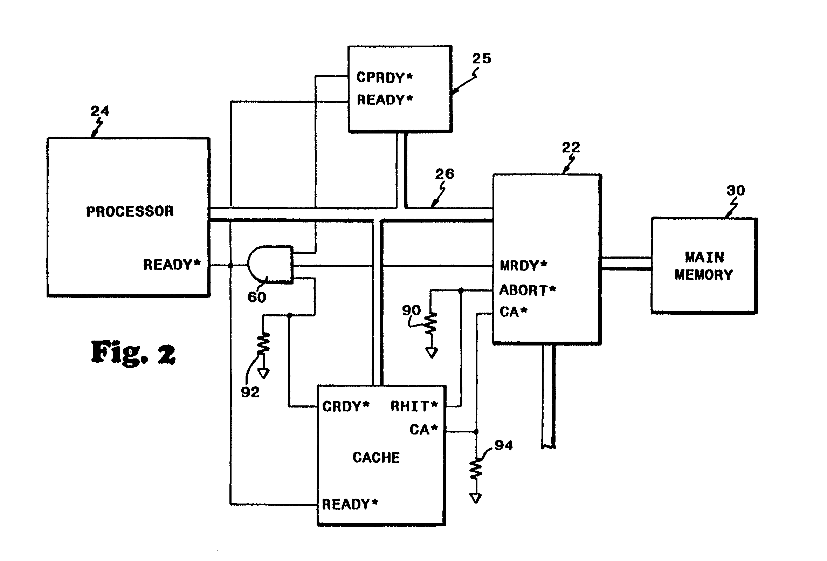

Referring now to Figure 2, a more detailed view of the lookaside cache system 28 depicting the output signals the cache system 28 uses to interface with the processor 24 and the controller chip 22 is shown. The cache controller 34 generates three control signal outputs, which are shown as separate signal connections apart from the processor bus 26 for clarity.

The cache controller 34 generates a cacheable address signal referred to as CA*, which is connected to an input of the controller chip 22 referred to as CA*. The cache controller 34 asserts the CA* signal low when the cache system 28 is enabled, the processor bus cycle is a processor memory read, and the addresses generated by the processor are cacheable addresses. Therefore, the cache controller 34 asserts the CA* signal when a memory address generated by the processor 24 on a processor read cycle is cacheable.

On a cache miss, the CA* signal acts as a request to the controller chip 22 that it return the data requested by the processor 24 in 16 bit units, even if the processor only requested an 8 bit segment of data. In this way, the cache controller 34 guarantees that it will be able to allocate the data that is retrieved from system memory and provided to the processor so that the data can be placed in the cache 32. If the addresses generated by the processor 24 reside in main memory 30, the CA* signal informs the memory controller 22 to return a complete 16 bit data word from main memory 30, even if the processor 24 only requested an 8 bit data word. If the requested memory address resides in memory located on the system bus 20 such as in the video memory or in the ROM 42, then the asserted CA* signal directs the bus controller 22 to return the requested data in 16 bit units. If the accessed memory located on the system bus 20 is 8 bit memory, the asserted CA* signal directs the bus controller 22 to perform two 8 bit data bus cycles to return a full 16 bit word to the processor 24.

The cache controller 34 generates a read hit signal referred to as RHIT*, which is connected to an input referred to as ABORT* on the controller chip 22.

The RHIT* signal is asserted low by the cache controller 34 when a cache read hit occurs in the cache 32 on a processor memory read cycle. The RHIT* signal discontinues any further operation of the controller chip 22 because the cache system 28 is able to supply the requested data to the processor 24. The asserted RHIT* signal aborts the operation of the memory controller if the data requested by the processor 24 resides in main memory 24. If the requested data resides in memory located off of the system bus 20, the asserted RHIT* signal aborts the operation of the bus controller. The RHIT* signal is also asserted low by the cache controller 34 when a processor reset signal referred to as PRESET is active in order to indicate the presence of the cache system 28 to diagnostics software. The RHIT* signal is also asserted low during I/O read or write cycles to an internal register inside the cache controller 34 in order to prevent the memory controller from interpreting these read or write cycles as system bus cycles. The RHIT* signal is otherwise asserted as a high value.

When the processor 24 initiates a processor bus cycle such as a processor memory read, one of either the cache controller 34 in the cache system 28, the controller chip 22, or the numeric coprocessor 25 are capable of responding. Therefore, the cache controller 34, the controller chip 22, and the numeric coprocessor 25 each generate a respective ready signal referred to as the CRDY* signal, the MRDY* signal, and the CPRDY* signal, respectively. These ready signals are each connected to an input of a 3 input AND gate 60. The output of the AND gate 60 is connected to the ready inputs (READY*) of each of the processor 24, the numeric coprocessor 25, and the cache controller 34. Therefore, the assertion of one of the ready signals by either the cache controller 34, the controller chip 22, or the coprocessor 25 informs the processor 24, the coprocessor 25, and the cache controller 34 that the processor bus cycle has been serviced and thereby terminates the processor bus cycle. The CRDY* signal is asserted low by the cache controller 34 on cache read hits in order to terminate processor bus read cycles in zero wait states. The CRDY* signal is also asserted when the processor 24 is programming an internal register inside the cache controller 34 in order to terminate these cycles in zero wait states. The CRDY* singal is also asserted during processor resets. Otherwise, the CRDY* signal is a high value.

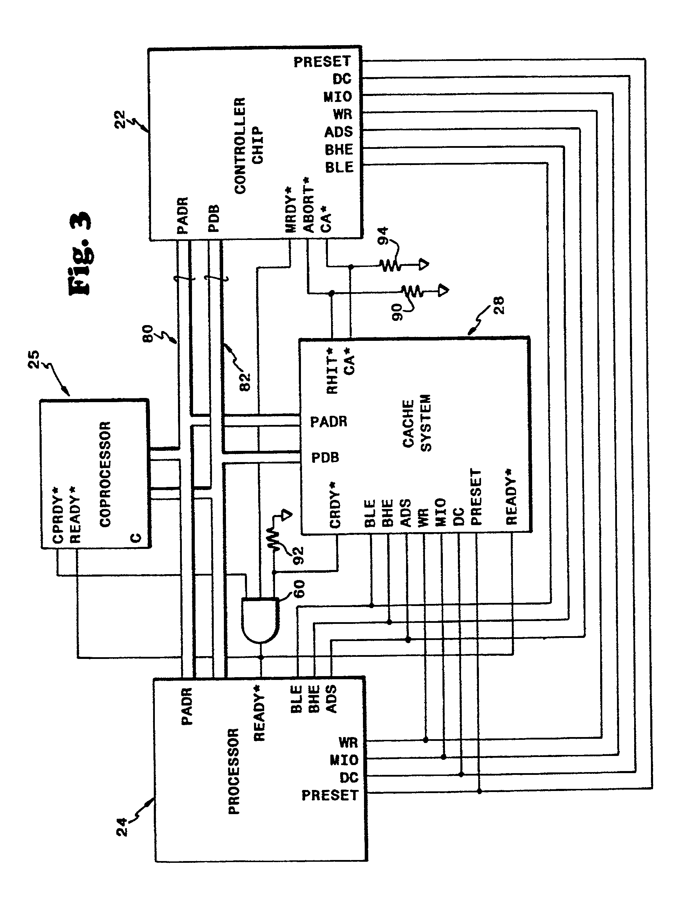

Referring now to Figure 3, a more detailed schematic diagram of portions of the control signal interface between the processor 24, the numeric coprocessor 25, the cache controller 34, and the controller chip 22, is generally shown. This diagram is intended to describe some of the processor control signals utilized by the cache controller 34 during its operation and is not intended to be a comprehensive analysis of the complete control signal interface between the cache controller 34 and the various other components in the system C. The processor address bus 26 is shown split into a processor address portion 80 and a processor data portion 82, each of which are shown shaded for the purpose of clarity. The control signal portion of the processor bus 26 is represented by some of the respective control signals generated by the processor 24, which are shown individually for the purpose of clarity.

The cache controller 34 and the controller chip 22 receive various control signals generated by the processor 24. For more information on the various control signals generated by the microprocessor, please refer to the specification of the 80386SX microprocessor in the 1989 Intel Microprocessor and Peripherals Handbook, Volume 1, published by Intel, which is hereby incorporated by reference.

The processor reset signal PRESET is generated by the controller chip 22 and is connected to the PRESET inputs of the cache controller 34 and the processor 24. The PRESET signal is asserted high when a processor reset is to occur, and this places the cache system 28 into a known reset state. The processor 24 generates a data/control signal referred to as the DC signal, which is connected to the DC inputs of the cache controller 34 and the controller chip 22. The DC signal informs the cache controller 34 and the controller chip 22 as to whether the current bus cycle is a data cycle or a code read or control cycle. The processor 24 generates a memory/input-output signal referred to as MIO that is connected to the MIO inputs of the cache controller 34 and the controller chip 22. The MIO signal informs the cache controller 34 and the controller chip 22 as to whether the current processor bus cycle is directed to the memory space or the input/output (I/O) space. The processor 24 generates a write/read signal referred to as WR that is connected to the WR inputs of the cache controller 34 and the controller chip 22. The WR signal informs the cache controller 34 and the controller chip 22 as to whether the current processor bus cycle is a write cycle or a read cycle. The processor 24 generates an address strobe signal referred to as the ADS signal which is connected to the ADS inputs of the cache controller 34 and the controller chip 22. The processor 24 asserts the ADS signal to indicate that a valid bus cycle definition and address have been driven onto the processor bus 26. The processor 24 generates two signals which enable data onto the respective portions of the 16-bit data bus. These signals comprise a bus high enable signal referred to as the BHE signal and a bus low enable signal referred to as the BLE signal. The BHE signal and the BLE signal are connected to the BHE and BLE inputs respectively of the cache controller 34 and the controller chip 22. The BHE signal enables data onto the most significant half of the 16-bit data bus, the data bus lines D8 through D15, and the BLE signal enables data onto the least significant half of the 16-bit data bus data bus, data lines D0 through D7.

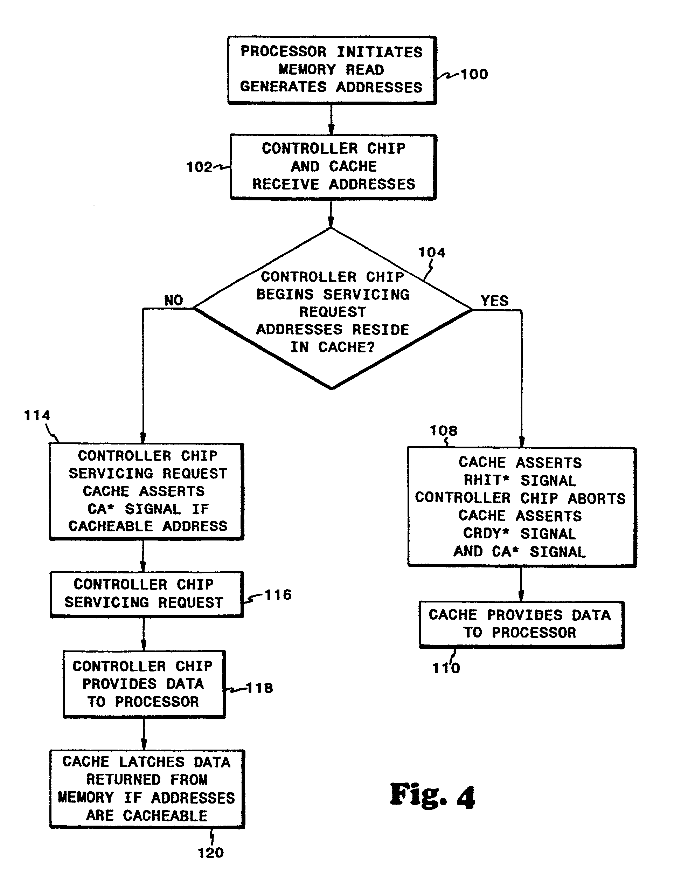

Referring now to Figures 4A and 4B, a flowchart describing the operation of the cache system 28 during a processor memory read is generally shown. It is understood that numerous of these operations may occur concurrently, but a flowchart format has been chosen to simplify the explanation of the operation. For clarity, the flowchart is shown in two portions, with the interconnection between Figures 4A and 4B designated by reference to the circled number one. The processor 24 initiates a memory read in step 100 and provides the respective memory addresses to the controller chip 22 by placing these addresses onto the address portion of the local processor bus 26. The controller chip 22 and the cache controller 34 receive the memory addresses generated by the processor 24 in step 102. In step 104, the controller chip 22 begins servicing the memory request. If the requested data resides in main memory 30, the memory controller begins servicing the memory request. If the requested data resides in a memory location physically located on the system bus 20, such as either the video memory or the ROM 42, the bus controller begins servicing the memory request. Also, in step 104 the cache controller 34 checks the addresses generated by the processor 24 with the addresses of the data resident in the cache 32 to determine whether the requested data resides in the cache 32.

If a cache hit occurs in the cache 32, the cache controller 34 asserts the RHIT* signal to the controller chip 22 in step 108, which causes the controller chip 22 to discontinue servicing the processor memory read cycle. The cache controller 34 asserts the CA* signal in step 108, signifying that the addresses on the address portion of the processor address bus 26 are cacheable addresses. The cache controller 34 also asserts the CRDY* signal to the processor 24 in step 108 in order to terminate the memory read bus cycle initiated by the processor 24 in step 100 in zero wait states. The cache controller 34 then provides the requested data to the processor 24 in step 110, which is essentially contemporaneous with the functions performed in step 108.

If a cache read miss occurs after the controller chip 22 and the cache controller 34 begin servicing the memory request in step 104, then the controller chip 22 continues servicing the memory request from the processor 24 in steps 114 through 118. If the memory addresses generated by the processor 24 are deemed to be cacheable addresses by the cache controller 34, then the cache controller 34 asserts the CA* signal to the controller chip 22 in step 114. As previously discussed, the assertion of the CA* signal directs the controller chip 22 to return the requested data in 16 bit units. The controller chip 22 continues servicing the memory request in step 114 and 116, this process taking considerably longer than if the data were stored in the cache 28 because of the slower memory access time of main memory 30 and memory located on the system board 20. The controller chip 22 provides the requested data to the processor 24 in step 118. The cache controller 34 allocates or latches the requested data returned from the controller chip 22 in step 120 if it had previously asserted the CA* signal in step 114. As previously described, the assertion of the CA* signal directs the controller chip 22 to return the requested data in a 16 bit unit.

When the processor 24 writes to system memory, the cache controller 34 latches the respective memory addresses generated by the processor 24 to determine if these addresses reside in the cache 32. If the generated addresses are cached, then the cache chip 28 latches the respective data generated by the processor 24 in order to update the memory location in the cache 32. If the generated addresses are not cached, then the cache chip 28 ignores the processor write cycles. Therefore, processor write cycles directly update system memory and also update the cache 32 if the addresses have already been cached.

The cache system 28 according to the present invention is an optional part of the computer system C and is easily removable with minimal changes to the system C. In this manner, the cache system 28 behaves like a coprocessor, and the processor 24 is generally oblivious as to whether or not the cache system 28 is present within the system C. Referring again to Figures 2 and 3, when the cache system 28 is removed from the computer system C, the ABORT* and CA* inputs to the controller chip 22 are at a logic high level due to the effects of pull-up resistors 90 and 94, to indicate that all processor memory read cycles are non-cacheable and cache misses. The CRDY* input to the AND gate 60 is also tied to a logic high value, preferably through a pull-up resistor 92, effectively making the 3 input AND gate 60 into a 2 input AND gate with inputs CPRDY* and MRDY*. Thus, the lookaside cache system 28 is easily removable from the computer system C with minimal changes to the computer system C.

Therefore, the present invention comprises a lookaside cache design that allows a cache system to be an optional and removable part of the computer system. In addition, the parallel lookaside design enables the memory controller or bus controller to begin processor memory read cycles concurrently with the cache system, thereby eliminating any delays caused by cache misses.

The foregoing disclosure and description of the invention are illustrative and explanatory thereof, and various changes in the size, shape, materials, components, circuit elements, wiring connections and contacts, as well as in the details of the illustrated circuitry and construction may be made without departing from the spirit of the invention.

**Claims**

1. A computer system having a lookaside cache system, comprising:
   a bus for passing address, data and control signals;
   a microprocessor coupled to said bus for providing address and control signals;
   main memory having address and control inputs and data lines;
   a memory controller coupled to said bus for receiving address and control signals from said microprocessor and coupled to said main memory address and control inputs to control operation of said main memory; and
   a cache system coupled to said processor bus for receiving address and control information from said processor concurrently with said memory controller.

2. The computer system of claim 1, wherein said cache system includes an output indicating that the data for the address requested in a memory cycle is present in said cache system; and
   wherein said memory controller includes an abort input for cancelling a memory operation, said abort input being coupled to said cache system present output.

3. The computer system of claim 2, wherein
   said memory controller further includes means for developing and outputting a ready signal when a memory cycle is completing;
   wherein said cache system further includes means for developing and outputting a ready signal when the data for the address requested in a memory cycle is present in said cache system;
   wherein said microprocessor includes a ready input to indicate that the next cycle can commence; and further comprising:
   means for combining said memory controller and said cache controller ready outputs to form said microprocessor ready input.

4. The computer system of claim 1, further comprising:
   a system bus for passing address, data and control signals;
   memory having address and control inputs and data lines coupled to said system bus;
   a bus controller coupled to said bus for receiving address and control signals from said microprocessor and coupled to said system bus for controlling operation of said system bus memory.

5. The computer system of claim 4, wherein said cache system includes an output indicating that the data for the address requested by the microprocessor in a memory cycle is present in said cache system;

wherein said memory controller includes an abort input for cancelling a memory operation, said abort input being coupled to said cache system present output; and

wherein said bus controller includes an abort input for cancelling a memory operation, said abort input being coupled to said cache system present output.

6. A computer system having a lookaside cache system, comprising:

a bus for passing address, data and control signals;

a microprocessor coupled to said bus for providing address and control signals;

main memory having address and control inputs and data lines;

a memory controller coupled to said bus for receiving address and control signals from said microprocessor and coupled to said main memory address and control inputs to control operation of said main memory; and

a cache system removably coupled to said processor bus for receiving address and control information from said processor concurrently with said memory controller.

7. The computer system of claim 6, wherein said cache system includes an output indiating that the data for the address requested in a memory cycle is present in said cache system; and

wherein said memory controller includes an abort input for concelling a memory operation, said abort input being coupled to said cache system present output, said memory controller abort input being biased to a level indicating the data is not present in said cache system and said bias being overridden if a cache system is installed and the data is present in said cache system.

8. The computer system of claim 7, wherein said memory controller further includes means for developing and outputting a ready signal when a memory cycle is completing;

wherein said cache system further includes means for developing and outputting a ready signal when the data for the address requested in a memory cycle is present in said cache system;

wherein said microprocessor includes a ready input to indicate that the next cycle can commence; and further comprising:

means for combining said memory controller and said cache controller ready outputs to form said microprocessor ready input.

9. The computer system of claim 6, further comprising:

a system bus for passing address, data and control signals;

memory having address and control inputs and data lines coupled to said system bus;

a bus controller coupled to said bus for receiving address and control signals from said microprocessor and coupled to said system bus for controlling operation of said system bus memory.

10. The computer system of claim 9, wherein said cache system includes an output indicating that the data for the address requested by the microprocessor in a memory cycle is present in said cache system;

wherein said memory controller includes an abort input for cancelling a memory operation, said abort input being coupled to said cache system present output, said abort input being coupled to said cache system present output, said memory controller abort input being biased to a level indicating the data is not present in said cache system and said bias being overridden if a cache system is installed and the data is present in said cache system; and

wherein said bus controller includes an abort input for cancelling a memory operation, said abort input being coupled to said cache system present output, said bus controller abort input being biased to a level indicating the data is not present in said cache system and said bias being overridden if a cache system is installed and the data is present in said cache system.

**Fig. 1**

Fig. 2

EP 0 461 925 A2

**Fig. 3**

COPROCESSOR 25
CPRDY*
READY*
C

PROCESSOR 24
PADR
READY*
BLE
BHE
ADS
PRESET
DC
MIO
WR

60  92

CACHE SYSTEM 28
CRDY*
PDB
PADR
RHIT*
CA*
BLE
BHE
ADS
WR
MIO
DC
PRESET
READY*

CONTROLLER CHIP 22
PADR
PDB
MRDY*
ABORT*
CA*
PRESET
DC
MIO
WR
ADS
BHE
BLE

80
82
90
94

PROCESSOR INITIATES
MEMORY READ
GENERATES ADDRESSES — 100

CONTROLLER CHIP
102 — AND CACHE
RECEIVE ADDRESSES

CONTROLLER CHIP
BEGINS SERVICING
REQUEST
ADDRESSES RESIDE
IN CACHE? — 104

NO ← → YES

114

CONTROLLER CHIP
SERVICING REQUEST
CACHE ASSERTS
CA* SIGNAL IF
CACHEABLE ADDRESS

108

CACHE ASSERTS
RHIT* SIGNAL
CONTROLLER CHIP ABORTS
CACHE ASSERTS
CRDY* SIGNAL
AND CA* SIGNAL

CONTROLLER CHIP
SERVICING REQUEST — 116

CONTROLLER CHIP
PROVIDES DATA — 118
TO PROCESSOR

CACHE PROVIDES DATA
TO PROCESSOR

110

CACHE LATCHES DATA
RETURNED FROM
MEMORY IF ADDRESSES
ARE CACHEABLE

120

**Fig. 4**